# EUROPEAN PATENT APPLICATION

(11) **EP 2 145 797 A2**
(43) Date of publication of application: **20.01.2010**
(21) Application number: 09380099.3
(22) Date of filing: 14.05.2009
(51) Int. Cl.: B60R 13/08

(54) **Vehicle part provided with sound insulation comprising crumb rubber**

(30) Priority: 11.07.2008 ES 200802076
(71) Applicant: Maier, S. Coop., 48300 Ajangiz (Bizkaia) (ES)
(72) Inventor: Aretxederreta Montero, Unai, 48300 Gernika (Bizkaia) (ES); Bengoetxea Urbieta, Mikel, 48280 Lekeitio (Bizkaia) (ES)
(74) Representative: Urteaga Simarro, José Antonio

(57) **Abstract**

Vehicle part provided with a sound insulating member (5), where the insulating member (5) is made of crumb rubber with a variable grain size and to which a binding material is added. The binding material is preferably a thermostable or thermoplastic material. The inventive insulating member (5) enables satisfactory sound insulation to be obtained at a reasonable price. Particularly, the vehicle part provided with an insulating member (5) may be a below-windscreen grille unit, for example provided with a below-windscreen grille (1) and a support (2).

## Description

### Technical field

The invention relates to a vehicle part, for example a below-windscreen grille unit, a door panel, a dashboard, a roof, a floor, a pillar, etc., where said part is provided with sound insulation means to insulate the vehicle passenger compartment from noise originating from other areas of the vehicle or from outside the vehicle.

### Prior art

There are certain parts of a vehicle in which noise is generated (for example the engine and the exterior of the vehicle), whereas there are other certain parts that should be free of noise (specifically the vehicle passenger compartment). Therefore, the latter certain parts of the vehicle must comprise, if possible, some kind of element that acts as a sound insulator, preventing the noise generated in the first areas from passing into the second areas.

One part of a vehicle that should have sound insulation, for example, is the below-windscreen grille unit. The below-windscreen grille unit is a set of pieces that is fitted to the vehicle bodywork approximately between the lower part of the windscreen and the upper part of the front bonnet or hood. The main functions of the below-windscreen grille unit are to give the lower area of the windscreen an aesthetic finish, channel the water running down from the windscreen to specific areas and enable air to pass from outside the vehicle into the passenger compartment.

The below-windscreen grille unit usually comprises two fundamental parts, a below-windscreen grille and a support. The below-windscreen grille is usually made of a thermoplastic material (normally black polypropylene) transformed by means of a plastic injection process. The below-windscreen grille enables the intake of air and water and provides the required aesthetic finish. The support, on to which the below-windscreen grille is fitted, provides structural support for the unit. Although supports have traditionally been metallic, plastic supports are increasingly being used.

In addition, in certain vehicles the below-windscreen grille unit is provided with a sound insulator to minimise the noise in the vehicle passenger compartment coming from the engine compartment. Said insulation is usually a non-woven fabric that offers excellent sound absorption, and which is hot stamped so that its shape is similar to that of the support. It is then connected to the support by means of a riveting process. This type of insulator is usually expensive, as a result of which it is usually only found in luxury vehicles.

Other vehicle parts likely to comprise a sound insulator in order to enhance sound insulation/absorption are door panels, the dashboard, the roof, the floor, the pillars, etc.

It is an aim of this invention to design a vehicle part provided with a sound insulator that is both cost-effective and, in functional terms, at least as insulating as conventional sound insulators.

### Brief description of the invention

It is an object of this invention to provide a vehicle part provided with a sound insulating member, where the insulating member is made of rubber. More specifically, the rubber used is a vulcanised crumb rubber with a variable grain size and to which a binding material is added. The binding material is preferably a thermostable material (for example, polyisopropene, phenol resin, NBR, SBR or EPDM) or a thermoplastic material (for example, polyethylene, polypropylene, polyamide, PBT, PET, polycarbonate or any mixture of these materials).

Preferably, the rubber originates from disused-vehicle tyres, remnants from the rubber industry, rubber scraps from vehicles, etc. This helps reduce the environmental impact of the product and the cost of the sound insulating member.

Up until now recycled tyre rubber has been used only for flooring in children's playgrounds, running tracks and other applications involving impact damping. However, a number of tests were carried out for the purposes of developing this invention and it was found that recycled tyre rubber is a very useful material for achieving satisfactory sound insulation at a reasonable cost. In fact, as shown in the figures ahead, which as will be explained refer to a specific case in which the sound insulating member based on crumb rubber is applied in a below-windscreen grille unit, the insulation provided by the rubber is similar to the insulation provided by the most common conventional below-windscreen grille unit insulating members. It was also found that the cost of a below-windscreen grille unit with a recycled rubber insulator is 20% lower than below-windscreen grille units comprising a non-textile insulator.

### Brief description of the drawings

Details of the invention can be seen in the accompanying non-limiting figures:
- Figure 1 shows a very schematic cross-section of an embodiment of the invention, where the part of the vehicle is a below-windscreen grille unit.
- Figure 2 shows an enlarged view of the riveted area of the unit of the preceding figure.
- Figure 3 is a graph that shows the frequency response of the damping offered by two embodiments of the invention and by two conventional below-windscreen grille units.

### Detailed description of the invention

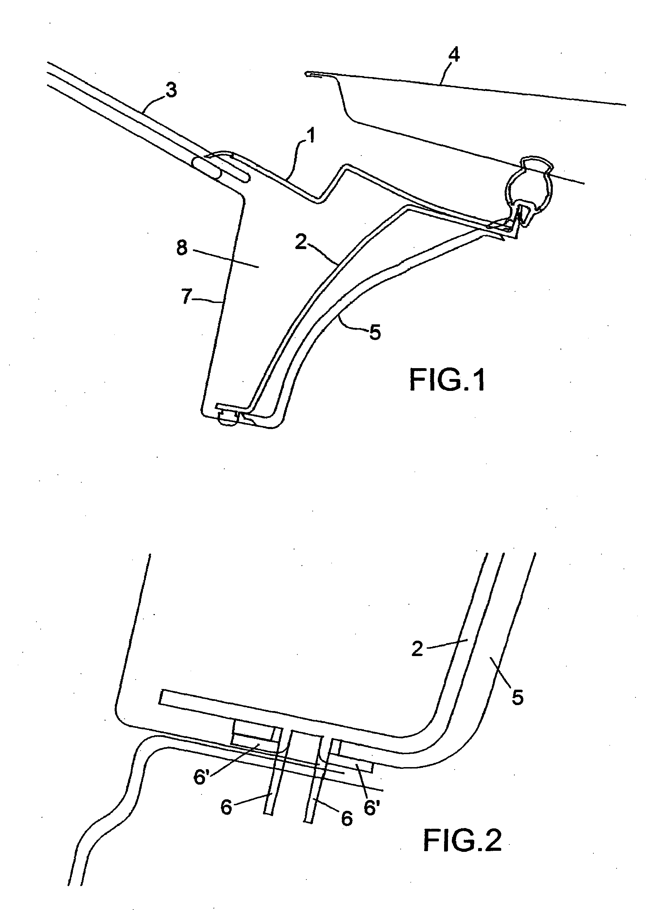

Figure 1 shows a very schematic cross-section of an embodiment of the invention, specifically applied on a below-windscreen grille unit. The below-windscreen grille unit is located between the rear part of the vehicle bonnet (4) and the lower part of the windscreen (3). The below-windscreen grille unit comprises a below-windscreen grille (1), a support (2) and an insulating member (5). In this embodiment the below-windscreen grille (1) is connected to the lower part of the windscreen (3) and supported on the support (2), while the support (2) is located between the below-windscreen grille (1) and the wall (7) of the bodywork. The insulating member (5) is connected to the support (2) by means of a mechanical connection situated in the lower part of the support (2) and visible in Figure 2. More specifically, as may be seen in Figure 2, the insulating member (5) is fitted by means of the riveting of protuberances (6) comprised in the support (2). The protuberances (6) are shown before being riveted (reference number 6) and after being riveted (reference number 6'). They may be riveted by means of heat, pressure, vibration etc. Riveted connections are extremely reliable and relatively non-expensive.

The invention contemplates alternative embodiments in relation to the connection between the insulating member (5) and the support (2).

For example, the invention contemplates another embodiment in which the insulating member (5) is glued to the support (2). This embodiment is more expensive than the embodiment that uses rivets, but it makes it easier for both pieces (5, 2) to be fitted together.

Another embodiment is contemplated in which the insulating member (5) is an insert in the support (2), the support being over-injected on the insulating member. This embodiment offers the following advantages: a phase in which both pieces (5, 2) are fitted together is not necessary; the bond between both pieces (5, 2) is optimal; in practice, both pieces (5, 2) form a single part.

In another embodiment, the insulating member (5) is compression-moulded onto the support (2). This embodiment offers the same advantages as the previous one.

In another embodiment the insulating member (5) and the support (2) are a single part. In other words, the support (2) comprises rubber particles, with the very material the support (2) is mainly made of acting as a binding material. The amount of rubber in the part may even be so great that said single part, i.e. the support (2) with a sound insulating function, may be a part almost fully made of rubber.

Alternatively, the insulating member (5) may be connected to the below-windscreen grille (1) or to the wall (7) of the bodywork, in case it is to act as an enclosure between the engine bay and the recess (8) of the below-windscreen grille unit.

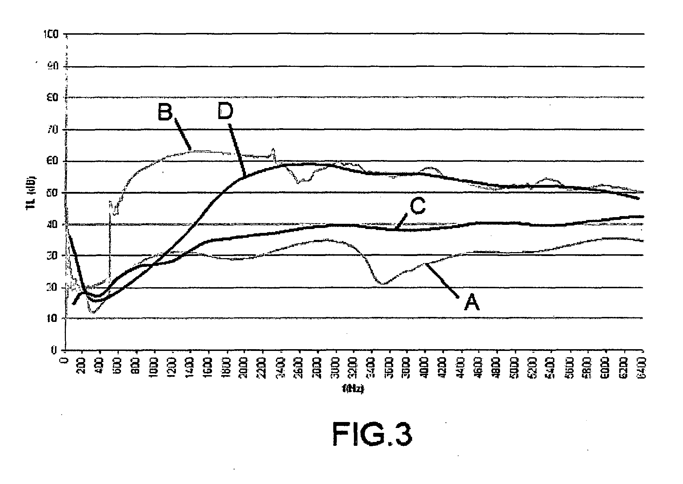

Figure 3 is a graph that shows the frequency response (Hz) of the damping (dB) offered by: a conventional below-windscreen grille unit in which the insulating member is a steel plate, denoted by the reference letter 'A'; a conventional below-windscreen grille unit in which the insulating member is the most commonly used non-textile material, denoted by the reference letter 'B'; an insulating member according to the invention, measured separately (without being included in a below-windscreen grille unit), denoted by the reference letter 'C'; a below-windscreen grille unit according to the invention, denoted by the reference letter 'D'. Following various sound insulation tests and analyses using sound-absorption measuring equipment (Kundt's tube) the results shown in the graph reveal that the inventive unit (D) has sound-insulation characteristics that are greatly superior to those of the steel one (A) and very similar to the non-textile (B) material, especially at high frequencies. At frequencies between 500 and 1600 Hz the behaviour of the inventive unit (D) is apparently not as good as that of the unit provided with the conventional insulation of a non-textile (B) material. It should be remembered, however, that in this particular range of frequencies tests performed with Kundt's tube are not very reliable, as is well known. More specifically, this test has been carried out using an impedance tube with a diameter of 100 mm for low frequencies (50-1600 Hz) and an impedance tube with a diameter of 29 mm for high frequencies (800-6400 Hz), with two result graphs being obtained. Both graphs were then overlapped and the high and low-frequency measurements were interpolated to obtain the corresponding results at frequencies between 500 and 1600 Hz.

There may be multiple values for the grain size and the proportion of rubber in relation to the binding material. Preferably, the rubber is ground to a grain size of between 0.1 and 5 mm. In a most advantageous way, the size should be between 0.5 and 2 mm. In addition, in the event that the insulating member (5) is a separate piece to the other components (1, 2) of the vehicle part, the insulating member (5) will preferably be made up of 80-97% rubber and 20-3% binding material.

## Claims

1. Vehicle part comprising at least one component (1, 2) and a sound insulating member (5), **characterised in that** the insulating member (5) comprises a mixture of crumb rubber and binding material.

2. Vehicle part according to claim 1, wherein the binding material is a thermostable material.

3. Vehicle part according to claim 2, wherein the binding material comprises polyisopropene, phenol resin, NBR, SBR or EPDM.

4. Vehicle part according to claim 1, wherein the binding material is a thermoplastic material.

5. Vehicle part according to claim 4, wherein the binding material comprises polyethylene, polypropylene, polyamide, PBT, PET, polycarbonate or any mixture of these materials.

6. Vehicle part according to claim 1, wherein the insulating member (5) and a component (1, 2) of the vehicle are formed in a single part.

7. Vehicle part according to claim 1, wherein the insulating member (5) is a separate part connected to at least one component (1, 2) of the vehicle part.

8. Vehicle part according to claim 7, wherein the insulating member (5) is fitted by means of a riveted connection to at least one component (1, 2) of the vehicle part.

9. Vehicle part according to claim 7, wherein the insulating member (5) is glued to at least one component (1, 2) of the vehicle part.

10. Vehicle part according to claim 7, wherein the insulating member (5) is an insert in a component (1, 2) of the vehicle part, the component (1, 2) being over-injected on the insulating member (5).

11. Vehicle part according to claim 7, wherein the insulating member (5) is compression-moulded onto at least one component (1, 2) of the vehicle part.

12. Vehicle part according to claim 7, wherein the insulating member (5) is preferably made up of 80-97% rubber and 20-3% binding material.

13. Vehicle part according to claim 1, wherein the rubber is ground to a grain size of between 0.1 and 5 mm.

14. Vehicle part according to claim 13, wherein the size is between 0.5 and 2 mm.
